# EUROPÄISCHE PATENTSCHRIFT

(11) **EP 3 911 888 B1**
(45) Veröffentlichungstag und Bekanntmachung des Hinweises auf die Patenterteilung: **29.11.2023**
(21) Anmeldenummer: 20700800.4
(22) Anmeldetag: 14.01.2020
(51) Int. Cl.: F16N 21/00, F16L 27/08, F16N 19/00, F16N 13/22

(54) **SCHMIERPUMPE UND FÜLLANSCHLUSS FÜR SCHMIERPUMPE**
LUBRICATION PUMP, AND FILLING CONNECTOR FOR LUBRICATION PUMP
POMPE DE LUBRIFICATION ET RACCORD DE REMPLISSAGE POUR POMPE DE LUBRIFICATION

(30) Priorität: 15.01.2019 DE 202019100212 U
(43) Veröffentlichungstag der Anmeldung: 24.11.2021
(73) Patentinhaber: Groeneveld-BEKA GmbH, 91257 Pegnitz (DE)
(72) Erfinder: Deinhardt, Franz, 91278 Pottenstein (DE); Florschütz, Claus, 95445 Bayreuth (DE)
(74) Vertreter: Meissner Bolte Partnerschaft mbB
(86) Internationale Anmeldenummer: PCT/EP2020/050750
(87) Internationale Veröffentlichungsnummer: WO 2020/148249

(56) Entgegenhaltungen:
- WO-A1-03/068593
- JP-A- S60 168 991
- US-A- 3 763 887
- US-A- 4 708 674
- US-A- 5 275 444

## Beschreibung

Die vorliegende Erfindung bezieht sich auf eine Schmierpumpe und einen Füllanschluss für eine Schmierpumpe. Die Dokumente WO03/068593A1 und US5275444A offenbaren ein Beispiel solch einer Schmierpumpe und eines Füllanschlusses. Es sind Schmierpumpen bekannt, die direkt an zu schmierenden Komponenten angebracht sind, um dosiert Schmierstoff an eine Schmierstelle abzugeben. Als Schmierstoff wird hierbei häufig ein hochviskoser Schmierstoff eingesetzt, der in einem Schmierstoffreservoir der Schmierstoffpumpe bereitgestellt ist und eine ausreichende Schmierleistung bei niedriger Dosierung ermöglicht.

Bei derartigen Schmierpumpen muss das Schmierstoffreservoir regelmäßig mit neuem Schmierstoff befüllt werden. Hierfür weisen Schmierpumpen üblicherweise einen entsprechenden Füllanschluss auf, der in Fluidverbindung mit dem Schmierstoffreservoir steht. Zur Befüllung des Schmierstoffreservoirs wird an den Füllanschluss eine Befüllpresse oder eine vergleichbare Vorrichtung angeschlossen und Schmierstoff über den Füllanschluss in das Schmierstoffreservoir gefüllt.

Je nach Einbauposition der Schmierpumpe an den zu schmierenden Maschinen werden dabei unterschiedlich ausgestaltete Füllanschlüsse benötigt, um bei einem Nachfüllvorgang die Befüllpresse im angeschlossenen Zustand betätigen zu können. Dies erfordert selbst bei Verwendung derselben Schmierpumpe abhängig von deren Einbauposition die Bereitstellung einer Vielzahl verschiedener Füllanschlüsse.

Der vorliegenden Erfindung liegt somit die Aufgabe zugrunde, die Befüllung von Schmierpumpen mit Schmierstoff im eingebauten Zustand zu erleichtern und zu beschleunigen, insbesondere unabhängig von der Einbauposition der Schmierpumpe.

Diese Aufgabe wird durch eine Schmierpumpe gemäß Anspruch 1 und durch einen Füllanschluss gemäß Anspruch 8 gelöst.

Insbesondere wird die Aufgabe gelöst durch eine Schmierpumpe, die Folgendes aufweist:
- Ein Schmierstoffreservoir;
- Mittel zum Fördern von Schmierstoff aus dem Schmierstoffreservoir an eine Schmierstelle;
- einen Füllanschluss zur Befüllung des Schmierstoffreservoirs mit Schmiermittel;
wobei der Füllanschluss ein reservoirseitiges Anschlussstück aufweist, das eine erste Anschlussrichtung estlegt, sowie ein befüllungsseitiges Anschlussstück, das eine zweite Anschlussrichtung festlegt, wobei das reservoirseitige Anschlussstück und das befüllungsseitige Anschlussstück gegeneinander verschwenkbar sind, derart, dass der Winkel zwischen den Anschlussrichtungen veränderbar ist, und wobei das reservoirseitige Anschlussstück und/oder das befüllungsseitige Anschlussstück ein Rückschlagventil und/oder einen Filter aufweisen, und/oder wobei das befüllungsseitige Anschlussstück eine Verschlusskappe zum Verschließen des Füllanschlusses aufweist.

Ein wesentlicher Gedanke der Erfindung liegt darin, den Füllanschluss der Schmierpumpe so auszubilden, dass die Anschlussstücke des Füllanschlusses gegeneinander verschwenkbar sind. Das pumpenseitige Anschlussstück ist an der Schmierpumpe angeschlossen und fest mit ihr verbunden, so dass die Anschlussrichtung des pumpenseitigen Anschlussstücks festgelegt ist. Durch die Verschwenkbarkeit der Anschlussstücke zueinander kann nun je nach Einbausituation das befüllungsseitige Anschlussstück so verschwenkt werden, dass die zweite Anschlussrichtung so orientiert ist, dass die Befüllung einfach vorgenommen werden kann. Damit lässt sich der Füllanschluss präzise auf den Einbauraum der Schmierpumpe einstellen und die Schmierpumpe unabhängig von ihrer Einbauposition einfach und schnell befüllen.

In einer bevorzugten Ausführungsform sind die Anschlussstücke des Füllanschlusses von einer Stellung, in der die Anschlussrichtungen zueinander parallel sind, in eine Stellung verschwenkbar, in der die Anschlussrichtungen im Wesentlichen zueinander senkrecht sind. Dabei kann der Füllanschluss auch beliebige Zwischenstellungen einnehmen, bei denen die Anschlussrichtungen weder parallel noch senkrecht zueinander stehen. Damit kann eine hervorragende Anpassbarkeit des Füllanschlusses an verschiedene Einbausituationen bereitgestellt werden. Der Füllanschluss der so ausgebildeten Schmierpumpe kann eine Vielzahl von bekannten Füllanschlüssen mit verschiedenen Geometrien ersetzen, es entfällt die Notwendigkeit, verschiedene Füllanschlusstypen je nach Einbausituation der Schmierpumpe bereitzuhalten.

"Parallel" bedeutet im Rahmen der vorliegenden Erfindung, dass die Anschlussrichtungen auf zueinander parallelen Geraden, vorzugsweise auf einer gemeinsamen Geraden liegen. Die Anschlussrichtungen sind dabei aber in entgegengesetzter Richtung orientiert. Somit umfasst der Begriff "parallel" im Rahmen der vorliegenden Erfindung auch die Bedeutung "entgegengesetzt parallel".

"Im Wesentlichen senkrecht" bezeichnet eine Stellung, bei der die Anschlussrichtungen miteinander einen Winkel von 90° einschließen, wobei kleine Abweichungen von bis zu 5° eingeschlossen sind.

In einer weiteren bevorzugten Ausführungsform weisen das pumpenseitige Anschlussstück und das befüllungsseitige Anschlussstück jeweils eine Kontaktfläche auf, an der sie miteinander in Kontakt sind. Das pumpenseitige Anschlussstück und das befüllungsseitige Anschlussstück sind hierbei vorzugsweise um eine senkrecht zu den Kontaktflächen stehende Rotationsachse gegeneinander verschwenkbar.

Die für die Befüllung vorgesehene Fluidverbindung zwischen den Anschlussstücken erstreckt sich dabei vorzugsweise durch die Kontaktflächen. Mit dieser Konfiguration kann der Füllanschluss besonders robust konstruiert werden und eine einfache und zuverlässige Abdichtung zwischen den Anschlussstücken bereitgestellt werden, da nur eine Abdichtung an den miteinander in Kontakt stehenden Kontaktflächen bereitgestellt werden muss.

Es ist ferner bevorzugt, dass die Kontaktfläche des pumpenseitigen Anschlussstücks mit der ersten Anschlussrichtung einen Winkel von 45° einschließt, und/oder dass die Kontaktfläche des befüllungsseitigen Anschlussstücks mit der zweiten Anschlussrichtung einen Winkel von 45° einschließt. Mit dieser Geometrie lässt sich ein Füllanschluss bilden, der zwischen einer Stellung mit parallelen Anschlussrichtungen in eine Stellung mit zueinander senkrechten Anschlussrichtungen verschwenkbar ist, so dass eine große Variation verschiedener Orientierungen für den Füllanschluss einstellbar ist.

In einer weiter bevorzugten Ausführungsform ist der Füllanschluss um eine zweite, durch die erste Anschlussrichtung festgelegte Rotationsachse rotierbar. Dadurch wird die Flexibilität der Orientierung des Füllanschlusses nochmals erhöht.

In einer weiteren bevorzugten Ausführungsform weist das pumpenseitige Anschlussstück und/oder das befüllungsseitige Anschlussstück ein Rückschlagventil und/oder einen Filter auf. Mit dem Rückschlagventil kann ein Rückfluss von Schmierstoff während und nach der Befüllung unterdrückt werden. Dies ist insbesondere bei Schmierpumpen mit Folgekolben von Vorteil. Das Rückschlagventil kann auch stromabwärts des Füllanschlusses in der Schmierpumpe integriert sein. Wird ein Filter in eines der Anschlussstücke integriert, kann eine Kontaminierung des Schmierstoffreservoirs bei dem Befüllungsvorgang vermieden werden, wenn sich beispielsweise Schmutz an einer Schmierstoffquelle befindet, die zur Befüllung des Schmierstoffreservoirs an den Füllanschluss angeschlossen wird.

In einer weiteren bevorzugten Ausführungsform weist das befüllungsseitige Anschlussstück eine Verschlusskappe zum Verschließen des Füllanschlusses auf. Damit kann eine Verunreinigung des Schmierstoffs im Schmierstoffreservoir verhindert werden.

Es ist ferner bevorzugt, dass das pumpenseitige Anschlussstück einen Steckanschluss zur Verbindung mit der Schmierpumpe aufweist. Dies ermöglicht eine einfache und schnelle Anbringung des Füllanschlusses an der Schmierpumpe, und erlaubt bei Bedarf einen schnellen Wechsel des Füllanschlusses, beispielsweise bei Beschädigung des Füllanschlusses.

Es ist weiterhin bevorzugt, dass das befüllungsseitige Anschlussstück einen Steckanschluss zur Verbindung mit einer Schmierstoffquelle, insbesondere einer Befüllpresse, aufweist. Dadurch kann der Befüllvorgang vereinfacht und beschleunigt werden.

Einer der beiden Steckanschlüsse oder beide Steckanschlüsse können in einer alternativen Ausführungsform durch Gewinde- bzw. Schraubanschlüsse ersetzt werden.

Es versteht sich von selbst, dass die erfindungsgemäße Schmierpumpe sowohl als Einpunkt-Schmiersystem, beispielsweise als Schmierstoffbuchse, als auch als Zentralschmiersystem ausgebildet sein kann.

Die Aufgabe wird ferner gelöst durch einen Füllanschluss um Anschluss an eine Schmierpumpe zur Befüllung der Schmierpumpe mit Schmiermittel, aufweisend ein reservoirseitiges Anschlussstück, das eine erste Anschlussrichtung festlegt, sowie ein befüllungsseitiges Anschlussstück, das eine zweite Anschlussrichtung festlegt, wobei das reservoirseitige Anschlussstück und das befüllungsseitige Anschlussstück gegeneinander verschwenkbar sind, derart, dass der Winkel zwischen den Anschlussrichtungen veränderbar ist, und wobei das reservoirseitige Anschlussstück und/oder das befüllungsseitige Anschlussstück ein Rückschlagventil und/oder einen Filter aufweisen, und/oder wobei das befüllungsseitige Anschlussstück eine Verschlusskappe zum Verschließen des Füllanschlusses aufweist.

Ein wesentlicher Aspekt des erfindungsgemäßen Füllanschlusses ist, wie oben bereits beschrieben, die Veränderlichkeit der relativen Orientierung der Anschlussrichtungen, die eine optimale Anpassung des Füllanschlusses zur Befüllung bei verschiedenen Einbaupositionen und -umgebungen einer Schmierpumpe erlaubt.

Der erfindungsgemäße Füllanschluss weist ferner vorzugsweise die im Zusammenhang mit der obenstehend beschriebenen Schmierpumpe genannten Merkmale auf, die im Folgenden nochmals wiedergegeben werden. Die sich aus den Merkmalen ergebenden Vorteile entsprechen dabei jeweils den oben beschriebenen Vorteilen.

In einer bevorzugten Ausführungsform sind die Anschlussstücke von einer Stellung, in der die Anschlussrichtungen zueinander parallel sind, in eine Stellung verschwenkbar, in der die Anschlussrichtungen im Wesentlichen zueinander senkrecht sind.

Es ist ferner bevorzugt, dass das pumpenseitige Anschlussstück und das befüllungsseitige Anschlussstück jeweils eine Kontaktfläche aufweisen, an der sie miteinander in Kontakt sind, und um eine senkrecht zu den Kontaktflächen stehende Rotationsachse gegeneinander verschwenkbar sind.

Weiter vorzugsweise schließt die Kontaktfläche des pumpenseitigen Anschlussstücks mit der ersten Anschlussrichtung einen Winkel von 45° einschließt, und/oder die Kontaktfläche des befüllungsseitigen Anschlussstücks mit der zweiten Anschlussrichtung einen Winkel von 45° ein.

Es ist weiterhin bevorzugt, dass das pumpenseitige Anschlussstück und/oder das befüllungsseitige Anschlussstück ein Rückschlagventil und/oder einen Filter aufweisen.

Ferner vorzugsweise weist das befüllungsseitige Anschlussstück eine Verschlusskappe zum Verschließen des Füllanschlusses auf. Das pumpenseitige Anschlussstück weist vorzugsweise einen Steckanschluss zur Verbindung mit einer Schmierpumpe auf. Das befüllungsseitige Anschlussstück weist vorzugsweise einen Steckanschluss zur Verbindung mit einer Schmierstoffquelle, insbesondere einer Befüllpresse, auf.

Es ist ferner bevorzugt, dass der Steckanschluss verdrehbar mit dem reservoirseitigen Anschlussstück verbunden ist, derart, dass der Steckanschluss gegenüber dem reservoirseitigen Anschlussstück um eine zweite, durch die erste Anschlussrichtung festgelegte Rotationsachse rotierbar ist.

Einer der beiden Steckanschlüsse oder beide Steckanschlüsse können in einer alternativen Ausführungsform durch Schraub- bzw. Gewindeanschlüsse ersetzt werden.

Weitere vorteilhafte Ausgestaltungen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine schematische Darstellung einer Schmierpumpe gemäß einer Ausführungsform der vorliegenden Erfindung;
- Fig. 2: eine perspektivische Darstellung eines Füllanschlusses gemäß einer Ausführungsform der vorliegenden Erfindung;
- Fig. 3a: den Füllanschluss aus Fig. 2 in einer ersten Stellung, in der die Anschlussrichtungen des Füllanschlusses parallel ausgerichtet sind;
- Fig. 3b: den Füllanschluss aus Fig. 2 in einer weiteren Stellung, in der die Anschlussrichtungen des Füllanschlusses um 45° zueinander abgewinkelt sind;
- Fig. 3c: den Füllanschluss aus Fig. 2 in einer noch weiteren Stellung, in der die Anschlussrichtungen des Füllanschlusses senkrecht zueinander ausgerichtet sind;
- Fig. 4: eine Schnittdarstellung eines Füllanschlusses gemäß einer Ausführungsform der vorliegenden Erfindung;
- Fig. 5: eine Seitenansicht eines Füllanschlusses gemäß einer weiteren Ausführungsform der vorliegenden Erfindung; und
- Fig. 6: eine Seitenansicht eines Anschlussstücks mit integriertem Filter gemäß einer weiteren Ausführungsform der vorliegenden Erfindung.

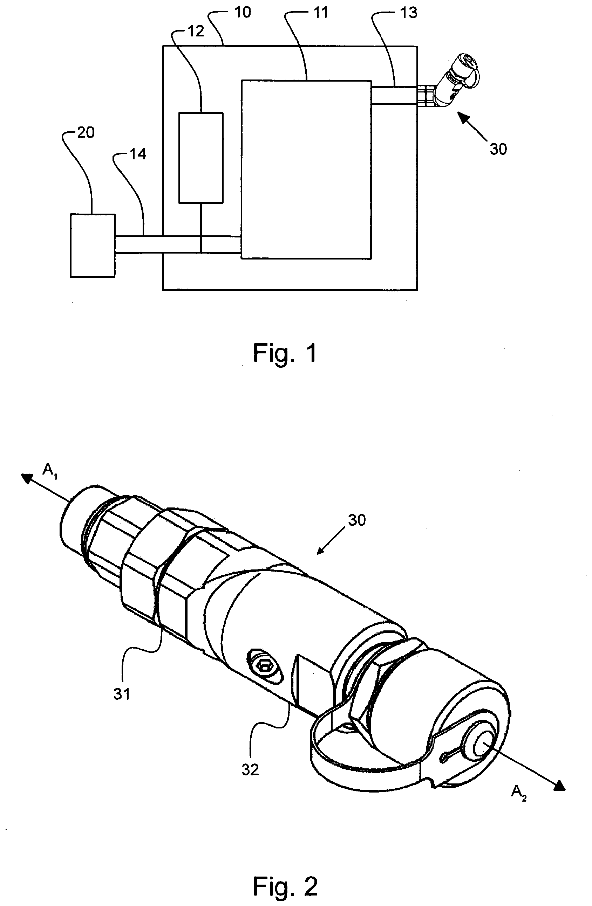

Fig. 1 zeigt eine schematische Darstellung einer Schmierpumpe 10 gemäß einer Ausführungsform der vorliegenden Erfindung. Die Schmierpumpe 10 weist ein Schmierstoffreservoir 11 auf, das über eine Zuleitung 13 mit Schmierstoff befüllbar ist. Das Schmierstoffreservoir ist mit einer Schmierstoffabgabeleitung 14 verbunden, durch die Schmierstoff an eine Schmierstelle 20 förderbar ist. Zur Förderung des Schmierstoffs sind Mittel 12 zum Fördern von Schmierstoff bereitgestellt, bei denen es sich beispielsweise um eine motorbetriebene Pumpeneinheit handeln kann. Die Mittel 12 zum Fördern von Schmierstoff können kontinuierlich Schmierstoff fördern oder zur dosierten Abgabe von Schmierstoff an die Schmierstelle 20 ausgelegt sein.

Zur Befüllung des Schmierstoffreservoirs 11 ist an der Außenseite der Schmierpumpe 10 ein Füllanschluss 30 vorgesehen, der zur Herstellung einer Fluidverbindung zwischen einem (nicht gezeigten) Schmierstoffvorrat und dem Schmierstoffreservoir 11 über die Zuleitung dient. Der Schmierstoffvorrat kann beispielsweise in einer Befüllpresse vorgesehen sein, die zur Befüllung des Schmierstoffreservoirs 11 an den Füllanschluss 30 angeschlossen wird.

Fig. 2 zeigt eine perspektivische Darstellung des Füllanschlusses 30 gemäß einer Ausführungsform der vorliegenden Erfindung. Der Füllanschluss weist ein reservoirseitiges Anschlussstück 31 auf, das in Fig. 1 mit der Schmierpumpe 10 verbunden ist, sowie ein befüllungsseitiges Anschlussstück 32, das von der Schmierpumpe 10 vorsteht, wenn der Füllanschluss 30 mit der Schmierpumpe 10 verbunden ist. Die beiden Anschlussstücke 31, 32 definieren jeweils eine Anschlussrichtung A₁ und A₂, entlang derer der Füllanschluss mit der Schmierpumpe 10 bzw. einem Schmierstoffvorrat angeschlossen werden kann.

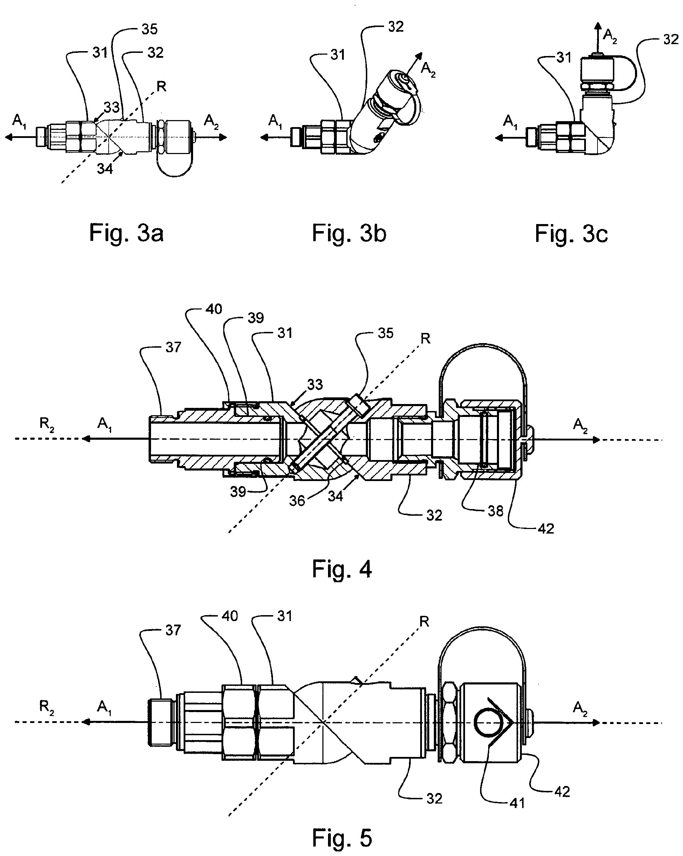

Fig. 3a zeigt den Füllanschluss 30 aus Fig. 2 in einer Seitenansicht. In der in Fig. 2 und 3a gezeigten Stellung des Füllanschlusses sind die Anschlussrichtungen A₁, A₂, des Füllanschlusses 30 parallel ausgerichtet. Wie in Fig. 3a zu erkennen ist, weist das reservoirseitige Anschlussstück 13 eine Kontaktfläche 33 auf, die an einer Kontaktfläche 34 des befüllungsseitigen Anschlussstücks 34 anliegt. Wie weiter unten noch im Detail erläutert wird, sind die Anschlussstücke 33, 34 mit aneinanderliegenden Kontaktflächen durch ein Befestigungsmittel 35 miteinander verbunden. Das Befestigungsmittel 35 ist in der vorliegenden Ausführungsform durch eine Schraube gebildet.

Das Befestigungsmittel 35 legt eine Rotationsachse R fest, die senkrecht auf Kontaktflächen 33, 34 steht. Die Anschlussstücke 31, 32 sind gegeneinander um die Rotationsachse R verschwenkbar, die senkrecht auf den Kontaktflächen 33, 34 steht, die mit den Anschlussrichtungen A₁, A₂ jeweils einen Winkel von 45° einschließen. Dadurch präzedieren bei einer Verschwenkungsbewegung die Anschlussrichtungen A₁, A₂ um die Rotationsachse R, so dass der Winkel zwischen den Anschlussrichtungen A₁, A₂ durch die Verschwenkungsbewegung veränderbar ist.

Wird der Füllanschluss 30 mit einer Schmierpumpe 10 verbunden, ist das reservoirseitige Anschlussstück 31 und damit die erste Anschlussrichtung A₁ festgelegt. Das befüllungsseitige Anschlussstück 32 kann dann um die Rotationsachse R verdreht werden und führt eine Schwenkbewegung aus, bei der sich der Winkel zwischen den Anschlussrichtungen A₁ und A₂ verändert. Diese Bewegung ist in den Figuren 3b und 3c dargestellt. Fig. 3b zeigt eine Stellung, bei der die Anschlussrichtungen A₁ und A₂ einen Winkel von 45° einschließen. Fig. 3c zeigt eine Stellung, bei der die Anschlussrichtungen A₁ und A₂ senkrecht aufeinander stehen.

Mit dem Füllanschluss 30 gemäß der vorliegenden Ausführungsform kann also ein gerader Anschluss zwischen der Schmierpumpe 10 und einem Schmierstoffvorrat bereitgestellt werden, bei dem der Anschluss für den Schmierstoffvorrat gerade von der Schmierpumpe 10 absteht. Ebenso kann der Füllanschluss 30 durch die Verschwenkbewegung in einen gewinkelten Anschluss mit beliebigem Winkel bis zu 90° zwischen den Anschlussrichtungen A₁, A₂ überführt werden.

Fig. 4 zeigt eine Schnittdarstellung des Füllanschlusses 30 gemäß einer Ausführungsform der vorliegenden Erfindung. Es ist zu erkennen, dass zwischen dem reservoirseitigen Anschlussstück 31 und dem befüllungsseitigen Anschlussstück 32 eine Fluidverbindung besteht, die durch die Kontaktflächen 33, 34 verläuft. Die Kontaktflächen 33, 34 sind gegenseitig mittels eines Dichtungsrings 36 abgedichtet, der in eine entsprechend ausgeformte kongruente ringförmige Nut in den Kontaktflächen 33, 34 eingelegt ist. Das reservorseitige Anschlussstück 31 ist an dem befüllseitigen Anschlussstück 32 durch ein Befestigungsmittel 35, in der vorliegenden Ausführung durch eine Schraube, befestigt. Das Befestigungsmittel 35 legt die Rotationsachse R fest, um die die Anschlussstücke zueinander verschwenkbar sind.

Das reservoirseitige Anschlussstück 31 weist an seinem der Kontaktfläche 33 abgewandten Ende einen männlichen Steckanschluss 37 zur Verbindung mit der Schmierpumpe 10 auf. Der Steckanschluss 37 ist an dem die Kontaktfläche 33 aufweisenden Teil des reservoirseitigen Anschlussstücks 31 derart gelagert, dass der Steckanschluss 37 entlang einer Gleitfläche 39 gegenüber dem reservoirseitigen Anschlussstück 31 um die Anschlussrichtung A₁ rotierbar ist. Die mechanische Verbindung zwischen dem Steckanschluss 37 und dem reservoirseitigen Anschlussstück 31 kann beispielsweise, wie in Fig. 4 und 5 gezeigt, durch eine Überwurfmutter 40 hergestellt werden. Der Steckanschluss 37 ist hierbei so mit dem die Kontaktfläche 33 aufweisenden reservoirseitigen Anschlussstück 31 verbunden, dass der Steckanschluss 37 gegenüber dem reservoirseitigen Anschlussstück 31 um die durch die Anschlussrichtung A₁ festgelegte Achse rotierbar ist. Damit kann der Füllanschluss 30 einen weiteren Freiheitsgrad zur Einstellung der zweiten Anschlussrichtung A₂ bei dem mit der Schmierpumpe 10 verbundenen Füllanschluss bereitstellen. In Fig. 4 und 5 ist die durch die Anschlussrichtung A₁ festgelegte Rotationsachse mit R₂ bezeichnet.

Das befüllungsseitige Anschlussstück 32 weist an seinem der Kontaktfläche 34 abgewandten Ende einen weiblichen Steckanschluss 38 auf, in den ein männlicher Steckanschluss eines Schmierstoffvorrats einsteckbar ist. Das befüllungsseitige Anschlussstück 32 ist mit einer Verschlusskappe 42 abgedeckt, die vor einem Befüllvorgang abgenommen werden kann, um den Steckanschluss 38 freizulegen.

Die in der vorliegenden Ausführungsform vorgesehenen Steckanschlüsse 37, 38 können je nach Anschluss an der Schmierpumpe 10 und an dem Schmierstoffvorrat auch durch einen weiblichen bzw. männlichen Steckanschluss ersetzt werden. Ebenso können anstatt der Steckanschlüsse Schraub- bzw. Gewindeanschlüsse, Einschraubverschraubungen mit einem Außengewinde oder mit einem Innengewinde versehene Anschlüsse zur Schraubverbindung an den Anschlussstücken 31 und 32 vorgesehen sein.

Der vorliegend beschriebene Füllanschluss 30 weist neben seiner flexiblen Geometrie eine sehr robuste Konstruktion auf. Es ist nur eine Kontaktstelle zwischen den Anschlussstücken 31, 32 abzudichten, die zudem durch aneinander liegende Kontaktflächen gebildet wird, was die Abdichtung nochmals erleichtert.

Zum Zusammenbau des beschriebenen Füllanschlusses 30 wird einfach das reservoirseitige Anschlussstück 31 mit dem befüllungsseitigen Anschlussstück 32 an ihren Kontaktflächen 33, 34 zusammengesetzt, wobei zwischen die Kontaktflächen 33, 34 der Dichtring 36 eingelegt wird. Die so zusammengesetzten Anschlussstücke 31, 32 werden dann mit dem Befestigungsmittel 35 aneinander befestigt.

Fig. 5 zeigt eine Seitenansicht eines Füllanschlusses 30 gemäß einer weiteren Ausführungsform der vorliegenden Erfindung. Der Aufbau des Füllanschlusses 30 entspricht im Wesentlichen dem in Fig. 4 gezeigten. Zusätzlich ist in dem befüllungssseitigen Anschlussstück 32 ein Rückschlagventil 41 angeordnet, das einen Wiederaustritt von Schmierstoff während und nach dem Befüllungsvorgang verhindert. Wird der in Fig. 4 gezeigte Füllanschluss 30 mit einer Schmierpumpe 10 verwendet, kann auch in der Zuleitung 13 der Schmierpumpe 10 ein Rückschlagventil angeordnet sein.

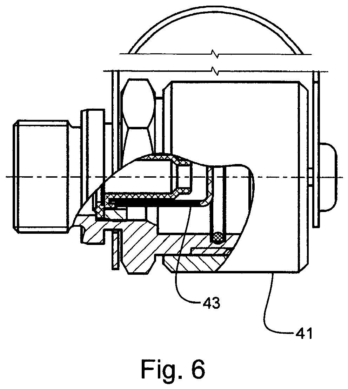

Alternativ oder zusätzlich zu dem Rückschlagventil kann in einem der Anschlussstücke 31, 32 zudem ein Filter 43 vorgesehen sein, mit dem die Kontamination des Schmierstoffreservoirs 11 bei einem Befüllungsvorgang verhindert werden kann. Fig. 6 zeigt eine Ansicht eines Anschlussstücks mit einem integrierten Filter 43. Vorzugsweise ist der Filter 43 in dem befüllungsseitigen Anschlussstück 32 angeordnet.

### Bezugszeichenliste

- 10: Schmierpumpe
- 11: Schmierstoffreservoir
- 12: Mittel zum Fördern von Schmierstoff
- 13: Zuleitung
- 14: Schmierstoffabgabeleitung

- 20: Schmierstelle

- 30: Füllanschluss
- 31: reservoirseitiges Anschlussstück
- 32: befüllungsseitiges Anschlussstück
- 33, 34: Kontaktfläche
- 35: Verbindungsmittel
- 36: Dichtungsring
- 37, 38: Steck- oder Gewindeanschluss
- 39: Gleitfläche
- 40: Überwurfmutter

- 41: Rückschlagventil
- 42: Verschlusskappe
- 43: Filter

- A₁: erste Anschlussrichtung
- A₂: zweite Anschlussrichtung
- R, R₂: Rotationsachsen

## Patentansprüche

1. Schmierpumpe (10), aufweisend:
• Ein Schmierstoffreservoir (11);
• Mittel (12) zum Fördern von Schmierstoff aus dem Schmierstoffreservoir (11) an eine Schmierstelle (20);
• einen Füllanschluss (30) zur Befüllung des Schmierstoffreservoirs (11) mit Schmiermittel;
wobei der Füllanschluss (30) ein reservoirseitiges Anschlussstück (31) aufweist, das eine erste Anschlussrichtung (A₁) festlegt, sowie ein befüllungsseitiges Anschlussstück (32), das eine zweite Anschlussrichtung (A₂) festlegt,
wobei das reservoirseitige Anschlussstück (31) und das befüllungsseitige Anschlussstück (32) gegeneinander verschwenkbar sind, derart, dass der Winkel zwischen den Anschlussrichtungen (A₁, A₂) veränderbar ist, und
wobei das reservoirseitige Anschlussstück (31) und/oder das befüllungsseitige Anschlussstück (32) ein Rückschlagventil (41) und/oder einen Filter (43) aufweisen, und/oder
wobei das befüllungsseitige Anschlussstück (32) eine Verschlusskappe (42) zum Verschließen des Füllanschlusses (30) aufweist.

2. Schmierpumpe (10) nach Anspruch 1, wobei die Anschlussstücke (31, 32) des Füllanschlusses (30) von einer Stellung, in der die Anschlussrichtungen (A₁, A₂) zueinander parallel sind, in eine Stellung verschwenkbar sind, in der die Anschlussrichtungen (A₁, A₂) im Wesentlichen zueinander senkrecht sind.

3. Schmierpumpe (10) nach Anspruch 1 oder 2, wobei das reservoirseitige Anschlussstück (31) und das befüllungsseitige Anschlussstück (32) jeweils eine Kontaktfläche (33, 34) aufweisen, an der sie miteinander in Kontakt sind, und um eine senkrecht zu den Kontaktflächen (33, 34) stehende Rotationsachse (R) gegeneinander verschwenkbar sind.

4. Schmierpumpe (10) nach einem der vorhergehenden Ansprüche, insbesondere nach Anspruch 3, wobei die Kontaktfläche (33) des reservoirseitigen Anschlussstücks (31) mit der ersten Anschlussrichtung (A₁) einen Winkel von 45° einschließt, und/oder
wobei die Kontaktfläche (34) des befüllungsseitigen Anschlussstücks (32) mit der zweiten Anschlussrichtung (A₂) einen Winkel von 45° einschließt.

5. Schmierpumpe (10) nach einem der vorhergehenden Ansprüche, wobei der Füllanschluss (30) um eine zweite, durch die erste Anschlussrichtung A₁ festgelegte Rotationsachse (R₂) rotierbar ist.

6. Schmierpumpe (10) nach einem der vorhergehenden Ansprüche, wobei das reservoirseitige Anschlussstück (31) einen Steck- oder Schraubanschluss (37) zur Verbindung mit der Schmierpumpe (10) aufweist.

7. Schmierpumpe (10) nach einem der vorhergehenden Ansprüche, wobei das befüllungsseitige Anschlussstück (32) einen Steck- oder Schraubanschluss (38) zur Verbindung mit einer Schmierstoffquelle, insbesondere einer Befüllpresse, aufweist.

8. Füllanschluss (30) zum Anschluss an eine Schmierpumpe (10) zur Befüllung der Schmierpumpe (10) mit Schmiermittel, aufweisend ein reservoirseitiges Anschlussstück (31), das eine erste Anschlussrichtung (A₁) festlegt, sowie ein befüllungsseitiges Anschlussstück (32), das eine zweite Anschlussrichtung (A₂) festlegt,
wobei das reservoirseitige Anschlussstück (31) und das befüllungsseitige Anschlussstück (32) gegeneinander verschwenkbar sind, derart, dass der Winkel zwischen den Anschlussrichtungen (A₁, A₂) veränderbar ist, und
wobei das reservoirseitige Anschlussstück (31) und/oder das befüllungsseitige Anschlussstück (32) ein Rückschlagventil (41) und/oder einen Filter (43) aufweisen, und/oder
wobei das befüllungsseitige Anschlussstück (32) eine Verschlusskappe (42) zum Verschließen des Füllanschlusses (30) aufweist.

9. Füllanschluss (30) nach Anspruch 8, wobei die Anschlussstücke (31, 32) von einer Stellung, in der die Anschlussrichtungen (A₁, A₂) zueinander parallel sind, in eine Stellung verschwenkbar sind, in der die Anschlussrichtungen (A₁, A₂) im Wesentlichen zueinander senkrecht sind.

10. Füllanschluss (30) nach Anspruch 8 oder 9, wobei das reservoirseitige Anschlussstück (31) und das befüllungsseitige Anschlussstück (32) jeweils eine Kontaktfläche (33, 34) aufweisen, an der sie miteinander in Kontakt sind, und um eine senkrecht zu den Kontaktflächen (33, 34) stehende Rotationsachse (R) gegeneinander verschwenkbar sind.

11. Füllanschluss (30) nach einem der Ansprüche 8 bis 10, insbesondere nach Anspruch 10, wobei die Kontaktfläche (33) des reservoirseitigen Anschlussstücks (31) mit der ersten Anschlussrichtung (A₁) einen Winkel von 45° einschließt, und/oder
wobei die Kontaktfläche (34) des befüllungsseitigen Anschlussstücks (32) mit der zweiten Anschlussrichtung (A₂) einen Winkel von 45° einschließt.

12. Füllanschluss (30) nach einem der Ansprüche 8 bis 11, wobei das reservoirseitige Anschlussstück (31) einen Steck- oder Schraubanschluss (37) zur Verbindung mit der Schmierpumpe (10) aufweist.

13. Füllanschluss (30) nach einem der Ansprüche 8 bis 12, insbesondere nach Anspruch 12, wobei der Steck- oder Schraubanschluss (37) verdrehbar mit dem reservoirseitigen Anschlussstück (31) verbunden ist, derart, dass der Steck- oder Schraubanschluss (37) gegenüber dem reservoirseitigen Anschlussstück (31) um eine zweite, durch die erste Anschlussrichtung (A₁) festgelegte Rotationsachse (R₂) rotierbar ist.

14. Füllanschluss (30) nach einem der Ansprüche 8 bis 13, wobei das befüllungsseitige Anschlussstück (32) einen Steck- oder Schraubanschluss (38) zur Verbindung mit einer Schmierstoffquelle, insbesondere einer Befüllpresse, aufweist.

## Claims

1. A lubrication pump (10) comprising:
- A lubricant reservoir (11);
- means (12) for conveying lubricant from the lubricant reservoir (11) to a lubrication point (20);
- a filling connection (30) for filling the lubricant reservoir (11) with lubricant;
wherein the filling connection (30) comprises a reservoir side connection piece (31) defining a first connection direction (A1) and a filling side connection piece (32) defining a second connection direction (A2),
wherein the reservoir side connection piece (31) and the filling side connection piece (32) are pivotable relative to each other in such a way that the angle between the connection directions (A1, A2) can be varied, and
wherein the reservoir side connection piece (31) and/or the filling side connection piece (32) comprise a check valve (41) and/or a filter (43), and/or
wherein the filling side connection piece (32) has a cap (42) for closing the filling connection (30).

2. Lubrication pump (10) according to claim 1, wherein the connection pieces (31, 32) of the filling connection (30) can be pivoted from a position in which the connection directions (A1, A2) are parallel to one another to a position in which the connection directions (A1, A2) are substantially perpendicular to one another.

3. Lubrication pump (10) according to claim 1 or 2, wherein the reservoir side connection piece (31) and the filling side connection piece (32) each have a contact surface (33, 34) at which they are in contact with each other, and are pivotable relative to each other about a rotary axes (R) perpendicular to the contact surfaces (33, 34).

4. Lubrication pump (10) according to one of the preceding claims, in particular according to claim 3, wherein the contact surface (33) of the reservoir side connection piece (31) encloses an angle of 45° with the first connection direction (A1), and/or
wherein the contact surface (34) of the filling side connection piece (32) forms an angle of 45° with the second connection direction (A2).

5. Lubrication pump (10) according to any one of the preceding claims, wherein the filling connection (30) is rotatable about a second rotary axes (R2) defined by the first connection direction A1.

6. Lubrication pump (10) according to any one of the preceding claims, wherein the reservoir side connection piece (31) has a plug-in or threaded connection (37) for connection to the lubrication pump (10).

7. Lubrication pump (10) according to one of the preceding claims, wherein the filling side connection piece (32) has a plug-in or threaded connection (38) for connection to a lubricant source, in particular a filling press.

8. Filling connection (30) for connection to a lubrication pump (10) for filling the lubrication pump (10) with lubricant, comprising a reservoir side connection piece (31) defining a first connection direction (A1) and a filling side connection piece (32) defining a second connection direction (A2),
wherein the reservoir side connection piece (31) and the filling side connection piece (32) are pivotable relative to each other in such a way that the angle between the connection directions (A1, A2) can be varied, and
wherein the reservoir side connection piece (31) and/or the filling side connection piece (32) have a check valve (41) and/or a filter (43), and/or wherein the filling side connection piece (32) has a cap (42) for closing the filling connection (30).

9. Filling connection (30) according to claim 8, wherein the connection pieces (31, 32) can be pivoted from a position in which the connection directions (A1, A2) are parallel to each other to a position in which the connection directions (A1, A2) are substantially perpendicular to each other.

10. Filling connection (30) according to claim 8 or 9, wherein the reservoir side connection piece (31) and the filling side connection piece (32) each have a contact surface (33, 34) at which they are in contact with each other and are pivotable relative to each other about a rotary axes (R) perpendicular to the contact surfaces (33, 34).

11. Filling connection (30) according to any one of claims 8 to 10, in particular according to claim 10, wherein the contact surface (33) of the reservoir side connection piece (31) encloses an angle of 45° with the first connection direction (A1), and/or
wherein the contact surface (34) of the filling side connection piece (32) forms an angle of 45° with the second connection direction (A2).

12. Filling connection (30) according to any one of claims 8 to 11, wherein the reservoir side connection piece (31) has a plug-in or threaded connection (37) for connection to the lubrication pump (10).

13. Filling connection (30) according to one of the claims 8 to 12, in particular according to claim 12, wherein the plug-in or threaded connection (37) is rotatably connected to the reservoir side connection piece (31) in such a way that the plug-in or threaded connection (37) can be rotated relative to the reservoir side connection piece (31) about a second rotary axes (R2) defined by the first connection direction (A1).

14. Filling connection (30) according to any one of claims 8 to 13, wherein the filling side connection piece (32) has a plug-in or threaded connection (38) for connection to a lubricant source, in particular a filling press.

## Revendications

1. Pompe de lubrification (10), présentant :
- Un réservoir de lubrifiant (11) ;
- Des moyens (12) pour transporter un lubrifiant du réservoir de lubrifiant (11) à un point de lubrification (20) ;
- Un raccord de remplissage (30) pour remplir le réservoir de lubrifiant (11) avec du lubrifiant ;
le raccord de remplissage (30) présentant une pièce de raccordement côté réservoir (31) qui définit une première direction de raccordement (A₁) ainsi qu'une pièce de raccordement côté remplissage (32) qui définit une deuxième direction de raccordement (A₂),
la pièce de raccordement côté réservoir (31) et la pièce de raccordement côté remplissage (32) étant pivotables l'une par rapport à l'autre de sorte que l'angle entre les directions de raccordement (A₁, A₂) soit modifiable et
la pièce de raccordement côté réservoir (31) et/ou la pièce de raccordement côté remplissage (32) présentant un clapet anti-retour (41) et/ou un filtre (43) et/ou
la pièce de raccordement côté remplissage (32) présentant un capuchon de fermeture (42) pour fermer le raccord de remplissage (30).

2. Pompe de lubrification (10) selon la revendication 1, dans laquelle les pièces de raccordement (31, 32) du raccord de remplissage (30) sont pivotables d'une position dans laquelle les directions de raccordement (A₁, A₂) sont parallèles entre elles à une position dans laquelle les directions de raccordement (A₁, A₂) sont essentiellement perpendiculaires entre elles.

3. Pompe de lubrification (10) selon la revendication 1 ou 2, dans laquelle la pièce de raccordement côté réservoir (31) et la pièce de raccordement côté remplissage (32) présentent chacune une surface de contact (33, 34) au niveau de laquelle elles sont en contact l'une avec l'autre et sont pivotables l'une par rapport à l'autre autour d'un axe de rotation (R) perpendiculaire aux surfaces de contact (33, 34).

4. Pompe de lubrification (10) selon l'une des revendications précédentes, en particulier selon la revendication 3, dans laquelle la surface de contact (33) de la pièce de raccordement côté réservoir (31) forme un angle de 45° avec la première direction de raccordement (A₁) et/ou
la surface de contact (34) de la pièce de raccordement côté remplissage (32) forme un angle de 45° avec la deuxième direction de raccordement (A₂).

5. Pompe de lubrification (10) selon l'une des revendications précédentes, dans laquelle le raccord de remplissage (30) est en mesure de tourner autour d'un deuxième axe de rotation (R₂) défini par la première direction de raccordement A₁.

6. Pompe de lubrification (10) selon l'une des revendications précédentes, dans laquelle la pièce de raccordement côté réservoir (31) présente un raccord enfichable ou vissé (37) pour la liaison avec la pompe de lubrification (10).

7. Pompe de lubrification (10) selon l'une des revendications précédentes, dans laquelle la pièce de raccordement côté remplissage (32) présente un raccord enfichable ou vissé (38) pour la liaison avec une source de lubrifiant, en particulier une presse de remplissage.

8. Raccord de remplissage (30) pour le raccordement à une pompe de lubrification (10) pour le remplissage de la pompe de lubrification (10) avec un lubrifiant, présentant une pièce de raccordement côté réservoir (31) qui définit une première direction de raccordement (A₁) ainsi qu'une pièce de raccordement côté remplissage (32) qui définit une deuxième direction de raccordement (A2),
la pièce de raccordement côté réservoir (31) et la pièce de raccordement côté remplissage (32) étant pivotables l'une par rapport à l'autre de sorte que l'angle entre les directions de raccordement (A₁, A₂) soit modifiable et
la pièce de raccordement côté réservoir (31) et/ou la pièce de raccordement côté remplissage (32) présentant un clapet anti-retour (41) et/ou un filtre (43) et/ou
la pièce de raccordement côté remplissage (32) présentant un capuchon de fermeture (42) pour fermer le raccord de remplissage (30).

9. Raccord de remplissage (30) selon la revendication 8, dans lequel les pièces de raccordement (31, 32) sont pivotables d'une position dans laquelle les directions de raccordement (A₁, A₂) sont parallèles entre elles à une position dans laquelle les directions de raccordement (A₁, A₂) sont essentiellement perpendiculaires entre elles.

10. Raccord de remplissage (30) selon la revendication 8 ou 9, dans lequel la pièce de raccordement côté réservoir (31) et la pièce de raccordement côté remplissage (32) présentent chacune une surface de contact (33, 34) au niveau de laquelle elles sont en contact l'une avec l'autre et sont pivotables l'une par rapport à l'autre autour d'un axe de rotation (R) perpendiculaire aux surfaces de contact (33, 34).

11. Raccord de remplissage (30) selon l'une des revendications 8 à 10, en particulier selon la revendication 10, dans lequel la surface de contact (33) de la pièce de raccordement côté réservoir (31) forme un angle de 45° avec la première direction de raccordement (A₁) et/ou
dans lequel la surface de contact (34) de la pièce de raccordement côté remplissage (32) forme un angle de 45° avec la deuxième direction de raccordement (A₂).

12. Raccord de remplissage (30) selon l'une des revendications 8 à 11, dans lequel la pièce de raccordement côté réservoir (31) présente un raccord enfichable ou vissé (37) pour la liaison avec la pompe de lubrification (10).

13. Raccord de remplissage (30) selon l'une des revendications 8 à 12, en particulier selon la revendication 12, dans lequel le raccord enfichable ou vissé (37) est relié de manière rotative à la pièce de raccordement côté réservoir (31) de sorte que le raccord enfichable ou vissé (37) soit pivotable par rapport à la pièce de raccordement côté réservoir (31) autour d'un deuxième axe de rotation (R₂) défini par la première direction de raccordement (A₁).

14. Raccord de remplissage (30) selon l'une des revendications 8 à 13, dans lequel la pièce de raccordement côté remplissage (32) présente un raccord enfichable ou vissé (38) pour la liaison avec une source de lubrifiant, en particulier une presse de remplissage.
